# EUROPEAN PATENT SPECIFICATION

(11) **EP 3 181 927 B1**
(45) Date of publication and mention of the grant of the patent: **11.12.2019**
(21) Application number: 14898133.5
(22) Date of filing: 21.07.2014
(51) Int. Cl.: F16C 17/04

(54) **AXIAL SLIDING BEARING**
AXIALGLEITLAGER
PALIER LISSE AXIAL

(43) Date of publication of application: 21.06.2017
(73) Proprietor: Joint Stock Company "Central Design Bureau of Machine Building", St.Petersburg 195112 (RU); SC "Atomenergomash", Moscow 119017 (RU)
(72) Inventor: GERASIMOV, Vladimir Sergeevich, St.Petersburg 198255 (RU); EVTUSHENKO, Sergei Pavlovich, St.Petersburg 194295 (RU); KAZANTSEV, Rodion Petrovich, St.Petersburg 194356 (RU); NIKIFOROV, Sergei Arkadyevich, Pushkin Leningradskaya obl. 196605 (RU); SEMYONOVYKH, Aleksandr Sergeevich, St.Petersburg 196135 (RU); SHCHUTSKY, Sergei Yuryevich, St. Peterburg 197227 (RU)
(74) Representative: Osmans, Voldemars
(86) International application number: PCT/RU2014/000537
(87) International publication number: WO 2016/013952

(56) References cited:
- FR-A- 732 675
- GB-A- 1 032 555
- JP-A- S56 138 516
- RU-C1- 2 242 645
- RU-C2- 2 534 659
- SU-A1- 344 183
- SU-A1- 1 745 004
- US-A- 1 640 352
- US-A- 2 110 464
- US-A- 3 201 184

## Description

The invention relates to plain thrust bearings with at least one working surface made of siliconized graphite (or other antifriction material with similar characteristics). The main area of its use is corresponding structural assemblies of electrical machines and hydraulic machines having thrust bearings of a large size (with a diameter up to 900 mm), preferably electric motors driving a main circulation pump assembly (MCPA) and the main circulation pump assemblies of water-cooled reactor assemblies, for example, in a nuclear power plant (NPP) themselves.

Siliconized graphite (as antifriction material for bearings) is characterized as heat-resistant material (at least up to 300°C) and enables use of water instead of oil as lubricant coolant. This solution is used in radial and thrust bearings of vane-type pumps, which are included by the MCPA.

However due to brittleness, a lower linear expansion coefficient than that of metal, complexity of manufacturing process of a plate as an integral unit of maximal overall dimensions up to 900 mm and complications in providing uniform and effective heat removal from a friction zone if the integral plate is used, manufacturing of the plates for the plain thrust bearings of the large diameter with use of siliconized graphite lubricated and cooled by water as antifriction material is impossible.

There are known plain thrust bearings for powerful steam turbine mounted on a shaft having a collar moving between two sets of sliders with Kingsbury's leveling lever system, wherein oil is used as cooling and lubricant fluid (see Serezhkina L.P., Zaryetsky E.I., Thrust bearings for powerful steam turbines, Mashinostroenie, 1988, pp. 39 to 41).

A disadvantage of the known thrust bearings using oil as cooling and lubricant fluid is increase of fire hazardous of nuclear power plant equipment including main circulation pumps functioning in nonoccupied area. To provide fire safety, a noncombustible lubricating and cooling fluid, in particular water, should be used. Use of water requires changes in construction, particularly a plate made with use of antifriction material functionally operative under cooling and lubricating by water should be installed on the collar.

There is known a plain thrust bearing comprising a body and a collar with a flange fixed on a shaft, wherein a bearing disk is mounted on a bearing surface of the collar and an assembly having self-aligning sliders provided with antifriction plates contacting with the disk by their bearing surfaces is placed between the body and the disk (see the patent RU2242645, F16C 17/04, published by 15.07.2003). The bearing includes a draw ring having windows (separator) for the antifriction plates and secured to a working surface of the assembly provided with the self-aligning sliders and the antifriction plates made as bushings and free accommodated by windows of the draw ring, wherein a working surface of the antifriction bushings project over a butt surface of the draw ring. The bearing disk is made as a solid antifriction ring. The antifriction bushings are step shaped in cross-section, wherein the steps deter the bushings from falling out from the windows of the draw ring.

The disadvantage of the known plain thrust bearing is use of the disk formed as the solid antifriction ring made as a monoblock on the flange (collar), which is impossible in a case of the thrust bearing of a large size (when the diameter is up to 900 mm). Moreover, load balancing in a contact area by means of the axially springing ring provided with the bushings made of antifriction material is impossible in the plain thrust bearing on large unit loading.

There is known a plain thrust bearing assembly comprising a body and a shaft provided with a flange, wherein a disk having circumferential projections is installed on a bearing surface of the flange and self-aligning sliders are arranged between the body and the disk in contact with the disk by their working surfaces (see the patent RU1745004, F16C 17/04, published by 28.02.1994).

This is known technical solution enabling functioning of the plain thrust bearing under large unit loading with use of antifriction plates made of siliconized graphite in a case of use of water as a lubricating and cooling fluid and has such disadvantages that unit loadings to self-adjusting sectors are not balanced and that hydrodynamic influence of lubricating and cooling fluid flow results in erosion damages during long-term functioning of the large-sized plain trust bearing.

There is known a plain thrust bearing described in the USA patent No. 2,110,464 comprising a comprising a body and a shaft provided with a flange, wherein self-aligning sliders provided with antifriction plates are arranged between the body and the bearing disk in contact with the bearing disk by their working surfaces.

The disadvantage of the known plain thrust bearing is use of the disk formed as the solid ring made as a monoblock, which is not suitable in a case of the thrust bearing of a large size when using water as a lubricating and cooling fluid.

The object of the invention is to form by a plate a contact surface of a shaft flange for a given large-sized plain thrust bearing provided with a Kingsbury's leveling lever system and functioning with use of siliconized graphite (or other materials having close characteristics) as antifriction material under condition of cooling and lubricating the bearing by water, which correspond to exploitation of the MCPA in the NPP.

By embodiment of the proposed invention the following technical results can be achieved:
- decrease of risk to damage antifriction elements made of siliconized graphite by bending stresses and thermal deformations due to unevenness of heat removal from a contact zone when solid form of the plate is used;
- improvement of circulation of cooling and lubricating water on the surface of the plain thrust bearing flange;
- improvement of manufacturability of the plate for the flange of the large-sized plain thrust bearing;
- providing the repairability of the plate for the flange of the large-sized plain thrust bearing;
- increase of reliability;
- decrease of fire hazardous;
- deterring sector set from rotation along a bearing disk.

As an object solution enabling achievement of the effect with the said characteristics there is provided a plain thrust bearing comprising a shaft provided with a flange, wherein a bearing disk having circumferential projections is mounted on the flange, wherein two circumferential projections are made on the surface of the bearing disk facing the flange and antifriction sectors are installed on the surface of the bearing disk opposite to the flange. According to the invention, it is proposed to provide the bearing disk with interleaving supporting bands and slots on the side facing to the sectors, to provide the bearing disk along its curcumferences of internal and external diameters with mounting surfaces, wherein external and internal rings fixing the sectors made of antifriction material through elastic elements are secured to the mounting surfaces, to fix the sectors to deter them from rotation in relation to the bearing disk by placing intermediate bars, comprising a pin, between the sectors, wherein the bars are fixed by inserting their pins into openings in the bearing disk, to provide the sectors made of antifriction material with steps for the external and internal rings, to provide the sectors with roundings on their side opposite to the bearing disk and with slots on their side facing the bearing disk ensuring mutual axial fixation of the sectors, to shape a sector's lead-in edge approximately as a parabolic curve, to cool and lubricate through interleaving channels formed by the bars, the sectors, the external and the internal rings.

It is preferable to fix a plate, that comprises the bearing disk and the antifriction sectors, to the flange in an intermediate space between the circumferential projections by bolts or screws lockable to deter from self-unbolting.

The sectors advantageously are made of siliconized graphite or silicon carbide.

The technical results are achieved in the following way.

To reduce risks to damage the sectors made of siliconized graphite (or other material having close characteristics) and to decrease transfer of bending deformations and thermal deformation to the sectors from the flange during working operation, the bearing disk comprises the circumferential projections on the side facing to the flange, wherein the projections are made in a zone close to a center of equilibrium of internal and external surfaces of the sectors made of siliconized graphite.

To deter the set of the sectors from rotation along the bearing disk during working operation each sector is locked by a side surface of the (intermediate) spacing bar placed between the sectors. The spacing bars are fixed in relation to the bearing disk by the bar pin inserted into the opening of the bearing disk; locking is carried out by bars having a mounting pins and installed at the beginning and the end of the sectors group. The bars, the (profiled) sectors made of siliconized graphite (or other material having close characteristics), and the external and internal fixing rings form the channels ensuring improvement of circulation of cooling and lubricating water on the contact surface of the flange of the plain thrust bearing during working operation.

Use of the set of the sectors made of siliconized graphite (or other antifriction material having close characteristics) ensures improvement of manufacturability of the flange plate for the plain thrust bearing of large size.

Replaceability of the separated sectors of the plate during manufacturing and exploitation ensures repairability of the flange plate for the plain thrust bearing of large size.

To reduce fire hazardous of the nuclear power plant equipment including the main circulation pumps functioning in nonoccupied area, the noncombustible cooling and lubricating fluid, i.e. water, is used and the plate made with use of antifriction material functioning when they are cooled and lubricated by water is mounted on the flange.

The claimed invention in particular embodiment is illustrated by Figures 1 to 8:
Fig. 1 shows the plain thrust bearing;
Fig. 2 shows the plate of the plain thrust bearing (the general view);
Fig. 3 shows channels of the plate (the view B of Fig. 2);
Fig. 4 shows the plate (the cross-section A-A of Fig. 2);
Fig. 5 shows the plate sector (the general view);
Fig. 6 shows the plate sector (the side view of Fig. 5);
Fig. 7 shows the plate bar (the general view);
Fig. 8 shows the plate bar (the view C of Fig. 5)

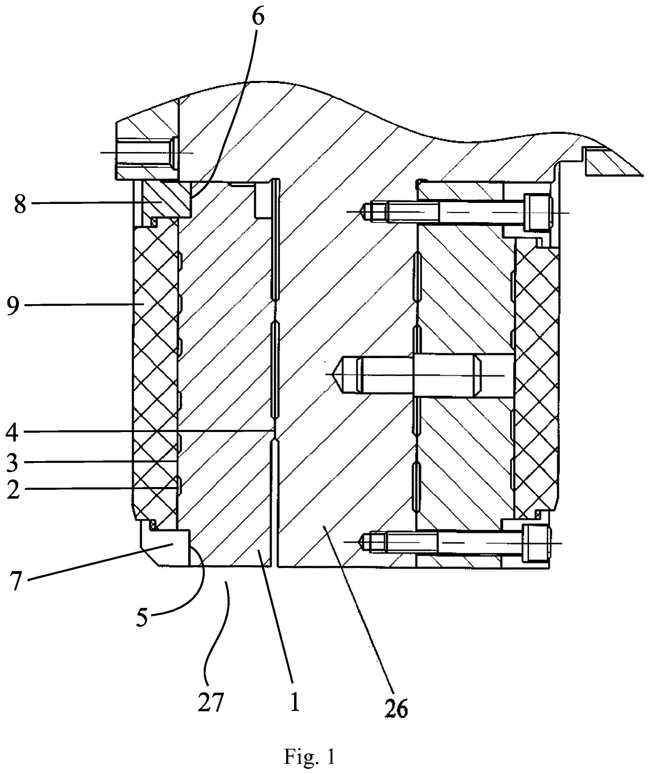

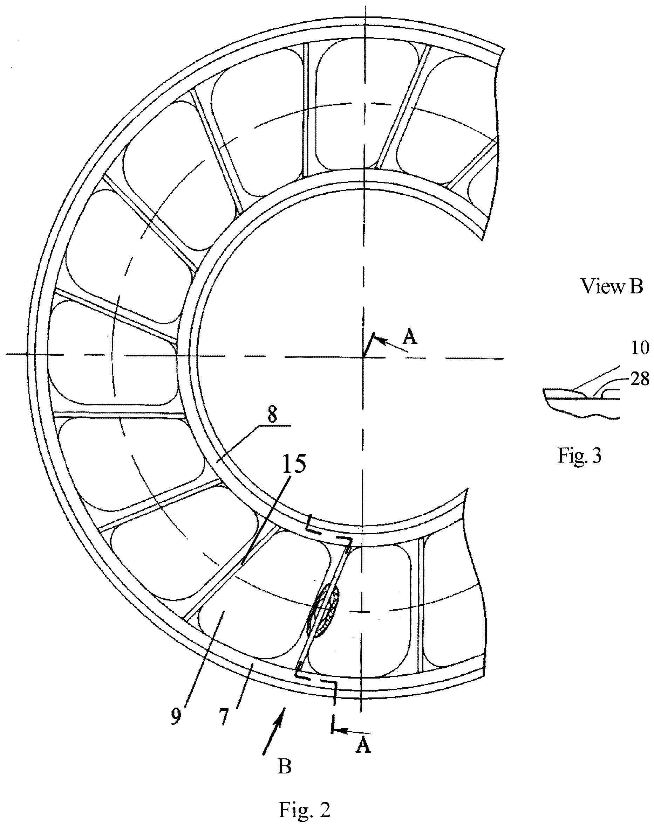

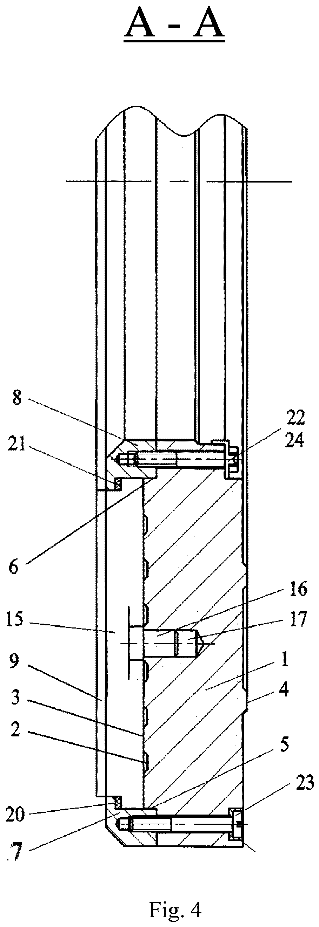

The plain thrust bearing of large size is embodied in a body (not shown) and is mounted on a flange of a shaft. The bearing is provided with the flange 26 moving between two sets of sliders and provided with Kingsbury's leveling lever system placed between the body and the bearing disk 1 (Fig. 4) and the plates 27 mounted on the flange (see Fig. 1). The plate 27 (Fig. 2) includes the bearing disk 1 (Fig. 4) embodied as a ring having a mounting surface along an internal diameter.

The bearing disk 1 has a surface comprising interleaving slots 2 and bearing bands 3 ensuring bearing conditions required by siliconized graphite strength conditions and, at the same time, providing with minimal area size for treatment of the mutual adjoining surface on the side facing to a set of sectors (Fig. 4).

The bearing disk 1 is provided with two bearing bands 4 (Fig. 4) on the side facing to the flange 26. The bearing bands are arranged in a zone situated closely to an equilibrium center of internal and external surfaces of the sectors made of siliconized graphite in order to reduce risk to damage the sectors and to reduce transfer of bending deformations and thermal deformations to the sectors from the collar during working functioning.

Circular grooves (steps) 5 and 6 coaxial to the mounting surface of the bearing disk are made along internal and external diameters of the bearing disk 1 (Fig. 4) on the side facing to the sectors in order to center corresponding external 7 and internal 8 rings. The set of the sectors 9 (Figs. 2, 4) made of siliconized graphite and geometrically shaped as sectors provided with working contact surfaces is mounted on the upper bearing surface of the bearing ring 1. Use of the set of the sector made of siliconized graphite ensures improvement of manufacturability of the plate of the flange for large-sized plain thrust bearing and increase of reliability and repairability during exploitation.

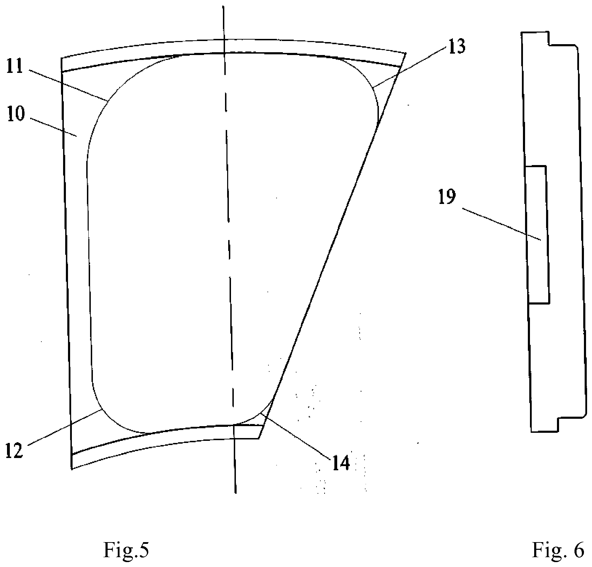

To prevent hydrodynamic disturbances, the lead-in edge 10 (Figs. 2, 5) of the sector 9 is deflected from the radial direction to the direction of rotation on the area of the sector with the bigger diameter. To ensure smooth change of direction of cooling and lubricating water flow from circumferential to radial one and vice versa in channels 28 near inlets and outlets between the sectors, the lead-in edge 10 of the sector is shaped approximately as a parabolic curve (Fig. 3) and corresponding radial roundings 11, 12, 13, and 14 (Fig. 5) are made along external and internal contour. Due to use of water as the cooling and lubricating fluid fire safety is ensured.

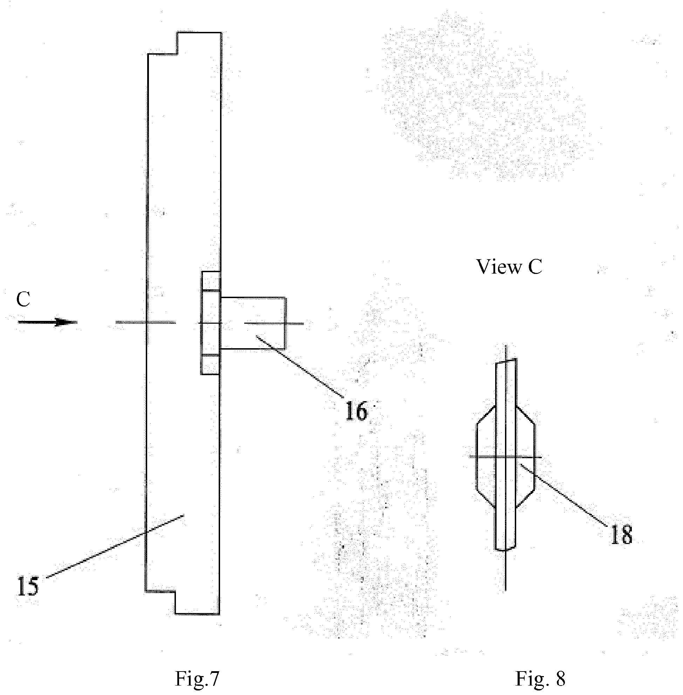

The sectors 9 are fixed to deter from rotation along the bearing disk 1 during working functioning with use of side surfaces of (intermediate) bars 15 (Figs. 4, 7). When the bar is being mounted, the pin 16 is inserted into the opening 17 in the bearing disk and stoppers 18 (Fig. 8) are inserted into the slots 19 (Fig. 6) of the sectors. This provides mutual axial fixation.

The sectors 9 are mounted along the bearing disk 1 (Fig. 4) by the external 7 and the internal 8 rings and elastic elements 20 and 21 (Fig. 4).

The sectors 9 are additionally fixed to deter from rotation along the bearing disk 1 by stopping (wedging) the sectors in relation to the external 7 and the internal 8 rings.

The fixing external 7 and internal 8 rings are secured to the disk by, particularly, the bolts 22 and the screws 23 (Fig. 4) and the stopping washers 24 and 25 (Fig. 4).

The plate 27 of the plain thrust bearing is secured to the flange 26 in the space between the bearing bands 4 (in particular case, by bolts or screws provided with stoppers deterring them from self-unbolting).

The plate is assembled by arranging the bars 15 on the bearing disk 1 and following arranging the sectors 9, the elastic elements 20, 21 and the fixing external 7 and internal 8 rings, and then they are secured to the bearing disk.

## Claims

1. A plain thrust bearing comprising a shaft provided with a flange (26), wherein a bearing disk (1) having circumferential projections (4) is mounted on the flange (26), wherein two circumferential projections (4) are made on the surface of the bearing disk (1) facing the flange (26), wherein antifriction sectors (9) are mounted on the surface of the bearing disk (1) opposite to the flange (26), **characterized in that** the bearing disk (1) is provided with interleaving supporting bands (3) and slots (2) on the side facing to the sectors (9), wherein the bearing disk (1) is provided with mounting surfaces (5, 6) along its circumferences of internal and external diameters, wherein external and internal rings (7, 8) securing the sectors (9) made of antifriction material through elastic elements (20, 21) are mounted on the mounting surfaces (5, 6), the sectors (9) are fixed to deter them from rotation in relation to the bearing disk (1) by intermediate bars (15) comprising a pin (16), the intermediate bars (15) being arranged between the sectors (9), wherein the bars (15) are fixed by inserting their pins (16) into openings (17) in the bearing disk (1), wherein the sectors (9) made of antifriction material are provided with steps for the external and internal rings (7, 8), wherein the sectors (9) are provided on their side opposite to the bearing disk (1) with roundings (11, 12, 13, 14) and the sectors (9) are provided on their side facing the bearing disk with slots (19) for mutual axial fixation, wherein a sector's lead-in edge (10) is shaped approximately as a parabolic curve, wherein interleaving channels (28) for cooling and lubricating are formed by the bars (15), the sectors (9), the external and the internal rings (7, 8).

2. A plain thrust bearing according to the claim 1, wherein a plate (27), formed by the bearing disk (1) and the antifriction sectors (9), is secured to the flange (26) by bolts or screws lockable to deter from self-unbolting in an intermediate space between the circumferential projections (4).

3. A plain thrust bearing according to the claim 1, wherein the sectors (9) are made of siliconized graphite or silicon carbide.

## Patentansprüche

1. Ein Axialgleitlager, umfassend eine Welle mit einem Flansch (26), wobei eine Tragscheibe (1), die einen Vorsprung (4) hat, am Flansch (26) aufgebaut ist, wobei zwei Vorsprünge (4) auf der zum Flansch (26) gerichteten Oberfläche der Tragscheibe (1) sind, wobei Antifriktionssektoren (9) auf der Oberfläche der Tragscheibe (1) gegenüber dem Flansch (26) aufgebaut sind, **dadurch gekennzeichnet, dass** die Tragscheibe (1) alternierende Rillen (3) und Stützbänder (2) an der Seite, die zu den Sektoren (9) gerichtet ist, hat, wobei die Tragscheibe (1) Montageflächen (5, 6) entlang ihrer Innen- und Außendurchmesser hat, wobei Außen- und Innenringe (7, 8), die die aus Antifriktionsstoff hergestellten Sektoren (9) festhalten, mittels der elastischen Elemente (20, 21) auf den Montageflächen (5, 6) aufgebaut sind, die Sektoren (9) befestigt sind, um die Drehung relativ zur Tragscheibe (1) mit Hilfe von zwischen den Sektoren (9) platzierten Zwischenstäben (15), die einem Stift (16) haben, zu verhindern, wobei die Zwischenstäbe (15) durch das Einsetzen ihrer Stifte (16) in den Löchern (17) der Tragscheibe (1) befestigt sind, wobei die aus Antifriktionsstoff hergestellten Sektoren (9) mit Stufen für die Innen- und Außenringe (7, 8) versehen sind, wobei die Sektoren (9) an deren Seite entgegen der Tragescheibe (1) mit Biegungen (11, 12, 13, 14) versehen sind, und die Sektoren (9) an deren zur Tragscheibe gerichteten Seite mit Nuten (19) zur gegenseitigen axialen Fixierung versehen sind, wobei die Einführungskante (10) des Sektors ungefähr eine Form der parabolischen Kurve hat, wobei die Wechselkanäle (28) zum Kühlen und Schmieren von Stäben (15), Sektoren (9), Außen- und Innenringen (7, 8) gebildet sind.

2. Das Axialgleitlager nach Ancpruch 1, wobei die von der Tragscheibe (1) und den Antifriktionssektoren (9) gebildete Platte (27) mit Hilfe von Bolzen oder Schrauben am Flansch (26) befestigt ist, um eine Selbsthemmung im Zwischenraum zwischen den Vorsprüngen zu verhindern (4).

3. Das Axialgleitlager nach Anspruch 1, wobei die Sektoren (9) aus silikonisiertem Graphit oder Siliziumkarbid hergestellt sind.

## Revendications

1. Un palier de glissement axial doté d'un arbre contenant une bride (26), où un disque d'appui (1) équipé des saillies annulaires (4) est monté sur la bride (26), où deux saillies annulaires (4) se trouvent sur la surface du disque d'appui (1) dirigée vers la bride (26), où les secteurs antifriction (9) sont montés sur la surface du disque d'appui (1) en face de opposée à la bride (26) **caractérisé en ce que** le disque d'appui (1) est pourvu des alternantes bandes d'appui (3) et des fentes (2) sur la côté faisant face aux secteurs (9), où le disque d'appui (1) est pourvu de surfaces de montage (5, 6) le long de ses circonférences de diamètres interne et externe, où les bagues externes et internes (7, 8) fixant les secteurs (9) fabriqués en matériau antifriction à l'aide des éléments élastiques (20, 21) sont montées sur les surfaces de montage (5, 6), les secteurs (9) étant fixés à les empêcher de tourner par rapport au disque d'appui (1) à l'aide des barres intermédiaires (15) contenant une broche (16), les barres intermédiaires (15) étant disposées entre les secteurs (9), où les barres (15) sont fixées en insérant leurs broches (16) dans des orifices (17) du disque d'appui (1), où les secteurs (9) fabriqués en matériau antifriction sont pourvus des pas prévus pour les bagues externe et interne (7,8), où les secteurs (9) sont pourvus d'arrondissures (11, 12, 13, 14) sur leur côté opposée au disque d'appui (1) et les secteurs (9) sont pourvus de fentes (19) sur leur côté faisant face au disque d'appui pour la fixation axiale mutuelle, où l'arête d'entrée (10) du secteur a une forme approximative d'une courbe parabolique, où les canaux alternants (28) destinés au refroidissement et au graissage sont formés par les barres (15), les secteurs (9), les bagues extérieure et intérieure (7, 8).

2. Un palier de glissement axial selon la revendication 1 dans lequel la plaque (27) formée par le disque d'appui (1) et les secteurs antifriction (9) est fixée sur la bride (26) à l'aide des boulons ou les vis fixés aux fins de rétention contre l'autodévissage dans l'espace intermédiaire entre les saillies annulaires (4).

3. Un palier de glissement axial selon la revendication 1 dans lequel les secteurs (9) sont fabriqués du graphite siliconé ou du carbure de silicium.
